# EUROPEAN PATENT SPECIFICATION

(11) **EP 1 288 610 B1**
(45) Date of publication and mention of the grant of the patent: **27.12.2006**
(21) Application number: 02005327.8
(22) Date of filing: 13.03.2002
(51) Int. Cl.: G01B 7/30, G01D 5/26, B62D 5/04, B62D 15/02

(54) **Steering rotation angle detecting apparatus of power steering system**
Vorrichtung zur Detektion des Lenkwinkels bei einer Hilfskraftlenkung
Appareil pour détecter l'angle de direction d'une direction assistée

(30) Priority: 28.08.2001 JP 2001258648
(43) Date of publication of application: 05.03.2003
(73) Proprietor: SHOWA CORPORATION, Gyoda-shi, Saitama (JP)
(72) Inventor: Takekawa, Junya, Showa Corporation, Haga-gun, Tochigi (JP); Fujisaki, Akira, Showa Corporation, Haga-gun, Tochigi (JP)
(74) Representative: Casalonga, Axel

(56) References cited:
- EP-A- 1 026 068
- DE-A- 19 823 903
- DE-A- 19 828 513
- US-A- 6 104 152

## Description

The present invention relates to an apparatus for detecting an absolute rotation angle of a steering system, such as a steering system which is about three times rotated from a left steering limit to a right steering limit.

As a structure for detecting a steering rotation angle of a steering wheel, there is generally an example described in Japanese Patent Application Laid-Open (JP-A) No. 8-101026 or the like.

The structure described in the publication mentioned above is an incremental type rotary encoder structured such that circular ring-like slit plates on which radial slits are formed at a predetermined uniform interval in a lower surface side of a steering wheel are concentrically mounted. An optical sensor at a fixed position detects the slits on the slit plates rotating together with the steering wheel. A rotation angle of the steering wheel is determined by a detected slit number.

Further, there is also an absolute type rotary encoder structured such that a binary n bit code is cut in slits so as to determine an absolute rotation angle.

However, in the case of the former incremental type encoder, the structure is made such that an absolute rotation angle at the present time is always held and a new rotation angle of the steering wheel is determined by adding or reducing the slit number detected by the rotation. Accordingly, once a displacement is generated, the rotation angle with keeping the displacement is thereafter determined, so that a specific mechanism for correcting the displacement such as a starting point correction or the like is required.

Further, the latter absolute type encoder can detect the absolute rotation angle without requiring the displacement correction. However, it is not possible to detect the rotation angle over 360 degrees as it is.

Moreover, from the document EP-A-1026068 a power steering system is known, wherein a first sensor detects the steering shaft angle, a second sensor detects the rotation of the electromotor, and a third sensor detects the torque applied to the steering shaft.

The present invention relates to a steering rotation angle detecting apparatus of a power steering system which can detect an absolute rotation angle over 360 degrees in a pinion shaft.

In accordance with one embodiment of the present invention, there is disclosed a steering rotation angle detecting apparatus of a power steering system having a driving force of a motor applied to a steering pinion shaft via a speed reduction mechanism to assist a steering. The steering rotation angle detecting apparatus comprises a steering pinion shaft rotation position detecting means for detecting a rotation position of the steering pinion shaft with respect to a fixed member; a motor phase detecting means for detecting cyclic rotation phase states of the motor; and a steering rotation angle detecting means for detecting an absolute rotation angle over 360 degrees of the steering pinion shaft on the basis of a steering pinion shaft rotation position information detected by the steering pinion shaft rotation position detecting means and a motor phase information detected by the motor phase detecting means.

A speed reduction ratio of the speed reduction mechanism is set so that the rotation phase states of the motor at cycles of 360 degrees of the steering pinion shaft rotation position are different.

As claimed, a steering rotation angle detecting apparatus of a power steering system having a driving force of a motor applied to a steering pinion shaft via a speed reduction mechanism to assist a steering, comprises a steering pinion shaft rotation position detecting means adapted to detect a rotation position of the steering pinion shaft with respect to a fixed member; and a motor phase detecting means adapted to detect cyclic rotation phase states of the motor.

The apparatus also comprises a steering rotation angle detecting means adapted to detect an absolute rotation angle over 360 degrees of the steering pinion shaft on the basis of a steering pinion shaft rotation position information detected by the steering pinion shaft rotation position detecting means and a motor phase information detected by the motor phase detecting means.

A speed reduction ratio of the speed reduction mechanism is set so that the rotation phase states of the motor at cycles of 360 degrees of the steering pinion shaft rotation position are different.

The steering pinion shaft rotation detecting means comprises an optical module.

The optical module is comprised in a torque sensor.

According to the invention, the optical module comprises a reflection disc adhered to a side of the steering pinion shaft, a bar code pattern attached to the reflection disc so that the optical module reads the bar code patterns of the reflective disc.

According to the invention, the optical module is comprised in a torque sensor adapted to detect a torque value on the basis of a difference of angles of an input shaft with respect to the steering pinion shaft. The torque sensor further comprises a second reflection disc adhered to a side of the input shaft, a bar code pattern attached to the reflection disc so that the optical module reads also the bar code patterns of the reflective disc.

The present invention will be more fully understood from the detailed description given below and from the accompanying drawings which should not be taken to be a limitation on the invention, but are for explanation and understanding only.
The drawings
FIG. 1 is a schematic back elevational view of a whole of an electrically driven power steering apparatus according to an embodiment of the present invention;
FIG. 2 is a cross sectional view of an interior portion of a gearbox;
FIG. 3 is a development view of a motor and an armature winding of a rotor;
FIG. 4 is a chart showing respective changes of a motor phase state, a number of rotation of the steering system, a position of rotation of the steering system, and an absolute rotation angle of the steering system, when the motor rotation number is around the first lap;
FIG. 5 is a chart showing respective changes of a motor phase state, a number of rotation of the steering system, a position of rotation of the steering system, and an absolute rotation angle of the steering system, when the motor rotation number is around the seventeenth lap;
FIG. 6 is a chart showing respective changes of a motor phase state, a number of rotation of the steering system, a position of rotation of the steering system, and an absolute rotation angle of the steering system, when the motor rotation number is around the thirty-third lap; and
FIG. 7 is a chart showing respective changes of a motor phase state, a number of rotation of the steering system, a position of rotation of the steering system, and an absolute rotation angle of the steering system, when the motor rotation number is around the forty-ninth lap.

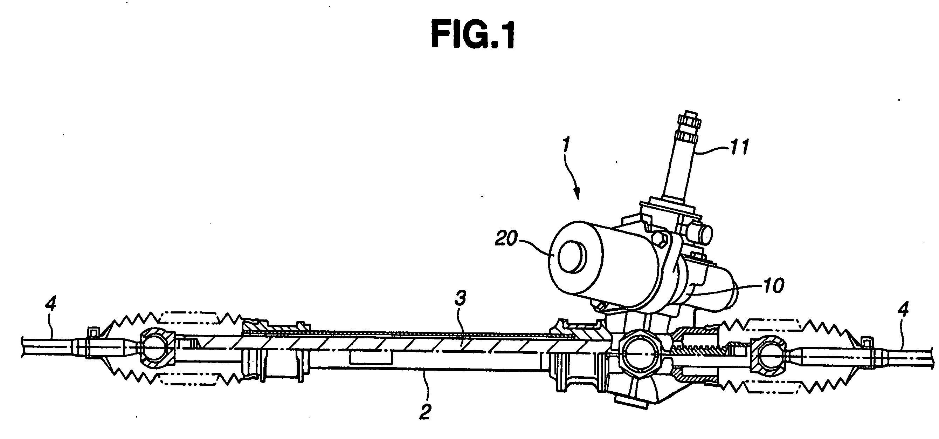

A description will be given below of an embodiment according to the present invention with reference to FIGS. 1 to 7.

FIG. 1 is a schematic back elevational view of an electrically driven power steering apparatus 1 according to an embodiment of the present invention.

The electrically driven power steering apparatus 1 is structured such that a rack shaft 3 is received within a substantially cylindrical rack housing 2 directed in a lateral direction of a vehicle (coinciding with a lateral direction in FIG. 1) in such a manner as to freely slide in a laterally axial direction.

Tie rods 4 and 4 are connected to both end portions of the rack shaft 3 protruding out from both end openings of the rack housing 2 via joints. The tie rods 4 and 4 are moved according to a movement of the rack shaft 3. Steered wheels of the vehicle are steered via a steering mechanism.

A steering gearbox 10 is provided in a right end portion of the rack housing 2.

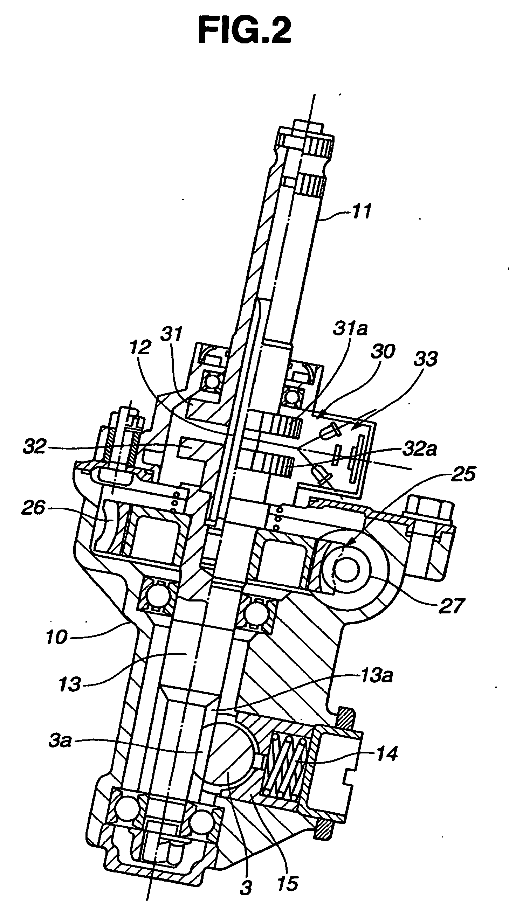

Relating to FIGS. 1 and 2, an input shaft 11 connected to a steering shaft with which a steering wheel (not shown) is integrally mounted, via a joint, is rotatably pivoted to the steering gearbox 10 via a bearing. The input shaft 11 is connected to a steering pinion shaft 13 so as to be relatively twisted via a torsion bar 12 within the steering box 10.

A helical gear 13a of the steering pinion shaft 13 is engaged with a rack gear 3a of the rack shaft 3.

Accordingly, a steering force transmitted to the input shaft 11 according to the rotating operation of the steering wheel rotates the steering pinion shaft 13 via the torsion bar 12 so as to slide the rack shaft 3 in the laterally axial direction due to the engagement between the helical gear 13a of the steering pinion shaft 13 and the rack gear 3a.

The rack shaft 3 is pressed from a back side by a rack guide 15 energized by a rack guide spring 14.

A motor 20 is mounted to an upper portion of the steering gearbox 10. A worm speed reduction mechanism 25 for reducing a driving force of the motor 20 so as to transmit to the steering pinion shaft 13 is constructed within the steering gearbox 10.

The worm speed reduction mechanism 25 is structured such that a worm 27 coaxially connected to a drive shaft of the motor 20 is engaged with a worm wheel 26 fitted and attached to an upper portion of the steering pinion shaft 13.

A number of wheel gears of the worm wheel 26 is 65. A number of worm grooves of the worm 27 is 4. A worm speed reduction ratio is 16.25.

The driving force of the motor 20 is applied to the steering pinion shaft 13 via the worm speed reduction mechanism 25 so as to assist a steering operation.

A torque sensor 30 is provided in a further upper portion of the worm speed reduction mechanism 25.

Reflection discs 31 and 32 are respectively adhered to a side of the input shaft 11 and a side of the steering pinion shaft 13 with respect to the torsion bar 12. An optical module 33 capable of reading bar code patterns 31a and 32a respectively provided in the reflection discs 31 and 32 is attached, whereby the torque sensor 30 is constituted.

The optical module 33 reads the bar code patterns 31a and 82a of the respective reflection discs 31 and 32. The torque sensor 30 detects a torque value on the basis of a difference of angle.

Further, the torque sensor 30 can detect a position of rotation of the steering pinion shaft 13 with respect to a fixed member by reading the bar code pattern 32a of the reflection disc 32 in a side of one steering pinion shaft 13. The torque sensor 30 also serves as a steering pinion shaft rotation position detecting means.

The motor 20 assisting the steering operation is a brushless motor. The motor 20 is structured such that three armature windings Lu, Lv and Lw are formed in eighteen slots. A rotor 21 (not shown in the Figure) in which six magnets comprising N poles and S poles are alternately structured at an interval of 60 degrees, rotates.

When sequentially attaching numbers to eighteen slots around which the armature windings Lu, Lv and Lw are wound and setting them first pole to eighteenth pole, a Hall element Hu is arranged between the fifteenth pole and the sixteenth pole, a Hall element Hv is arranged between the thirteenth pole and the fourteenth pole, and a Hall element Hw is arranged between the seventeenth pole and the eighteenth pole.

Accordingly, an interval of 40 degrees is generated between the Hall element Hv and the Hall element Hu, and between the Hall element Hu and the Hall element Hw.

Three Hall elements Hu, Hv and Hw can detect six phase states during a rotation of 120 degrees corresponding to a minimum rotation angle at which the rotor 21 rotates and phase states (positions of rotation) of the N pole and the S pole becomes the same.

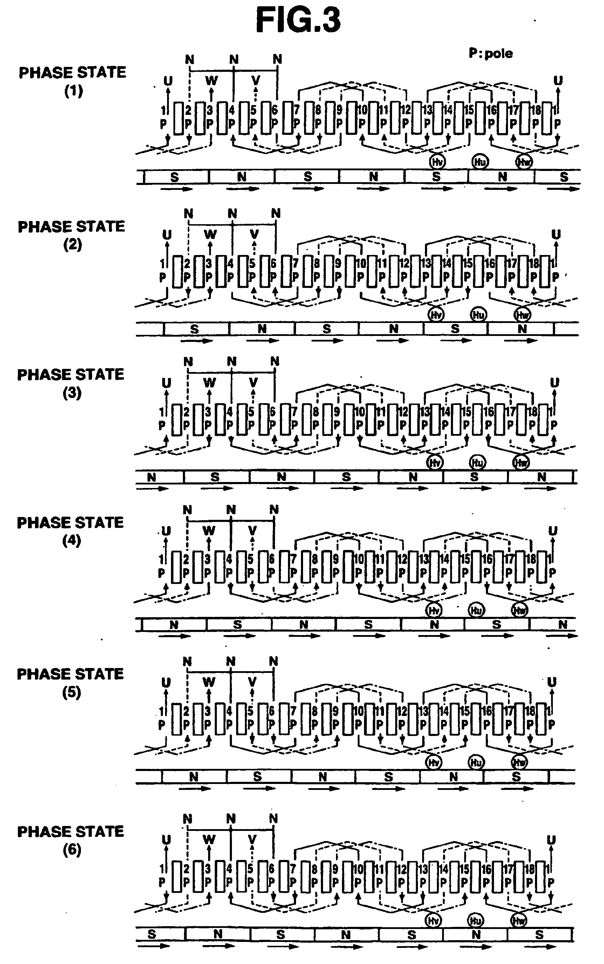

FIG. 3 is a view showing the rotor 21 of the motor 20 and the first pole to the eighteenth pole given by the armature windings Lu, Lv and Lw in a linearly developing manner. Six phase states mentioned above are sequentially illustrated from item (1) to (6)

The Hall elements Hu, Hv and Hw sequentially detect the N pole, the S pole and the N pole in a phase state (1), detects the S pole, the S pole and the N pole in a phase state (2) after rotating at 20 degrees therefrom, detects the S pole, the N pole and the N pole in a phase state (3) after rotating at 20 degrees further, detects the S pole, the N pole and the S pole in a phase state (4) after rotating at 20 degrees further, detects the N pole, the N pole and the S pole in a phase state (5) after rotating at 20 degrees further, detects the N pole, the S pole and the S pole in a phase state (6) after rotating at 20 degrees further.

As mentioned above, the different phase states (1), (2), (3), (4), (5) and (6) are sequentially detected at every 20 degrees. The above detection is repeated at three times, whereby the rotor 21 of the motor 20 rotates one lap.

Since the steering (the steering pinion shaft 13) rotates via the worm speed reduction mechanism 25 at a degree of 360/16.25 22.154 on the basis of the worm speed reduction ratio 16.25 during a period for which the rotor 21 of the motor 20 rotates one lap, the phase state is switched once (the rotor 21 rotates at 20 degrees) and the steering rotates at a degree of 20/16.25 ≒ 1.231.

The steering rotates about 1.5 laps from the normal straight traveling state toward a left steering and a right steering, respectively, that is, rotates about three laps from a left steering limit to a right steering limit.

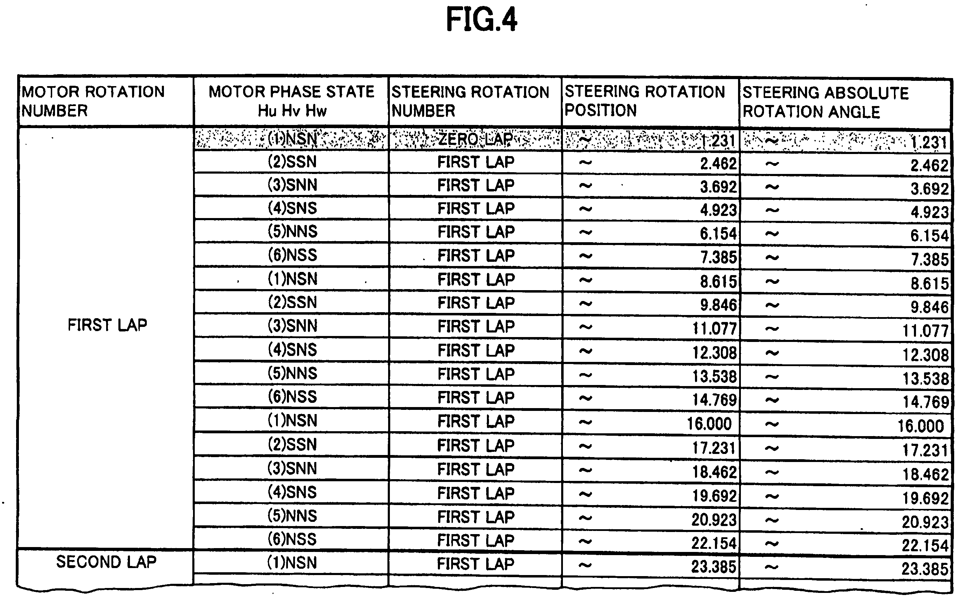

Setting the phase state (1) near the left steering limit to a state such that in a first lap of the motor rotation number, the steering rotation number is 0 lap (start of the first lap), the steering rotation position is between 0 and 1.231 degrees and a steering absolute rotation angle is between 0 and 1.231 degrees. Table 1 in FIG. 4 shows respective changes of the motor rotation number, the motor phase state, the steering rotation number, the steering rotation position and the steering absolute rotation angle until the steering rotation executes about three laps (enters a little into a fourth lap).

In this case, the steering rotation position is a right rotation angular position in the case of setting the start of the phase state (1) near the first left steering limit to 0 degree (reference). The steering rotation position is detected by the optical module 33 of the torque sensor 30 and is returned to 0 degree when the steering rotates one lap at a cycle of 360 degrees.

The steering absolute rotation angle is a right steering (right rotation) absolute angle in the case of setting the start of the phase state (1) near the left steering limit to 0 degree (reference). The steering absolute rotation angle is indicated by a value which is always increased in the right rotation and is reduced in the left rotation without waiting the cycle. All the steering angles of the steering system can be expressed by the steering absolute rotation angle.

As is understood from charts in FIGS. 4 to 7, the motor phase states at the same steering rotation position in the respective laps of the steering rotation number are different from each other.

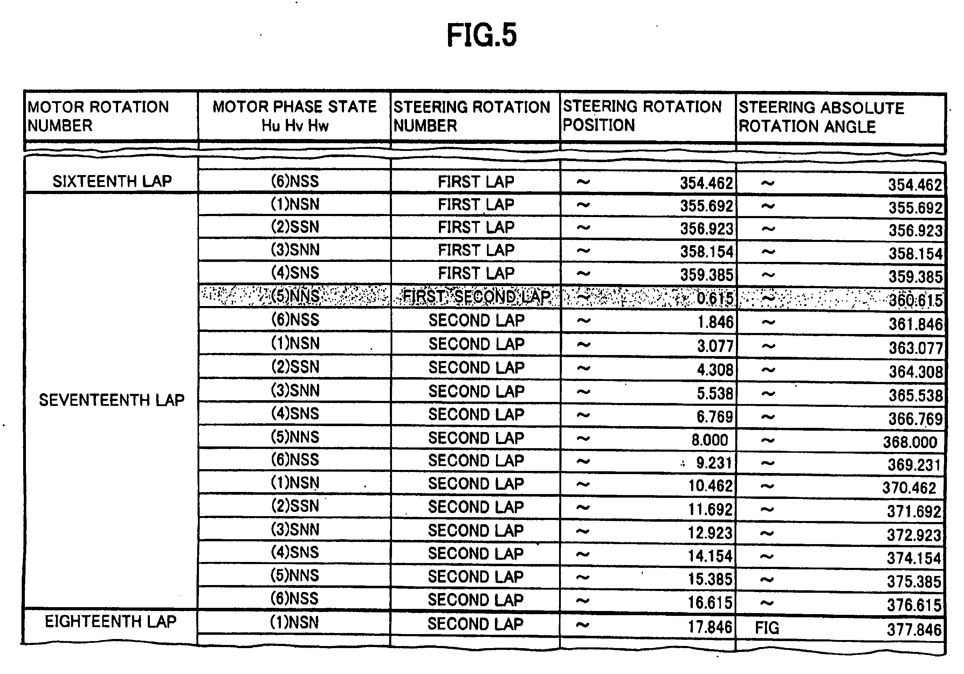

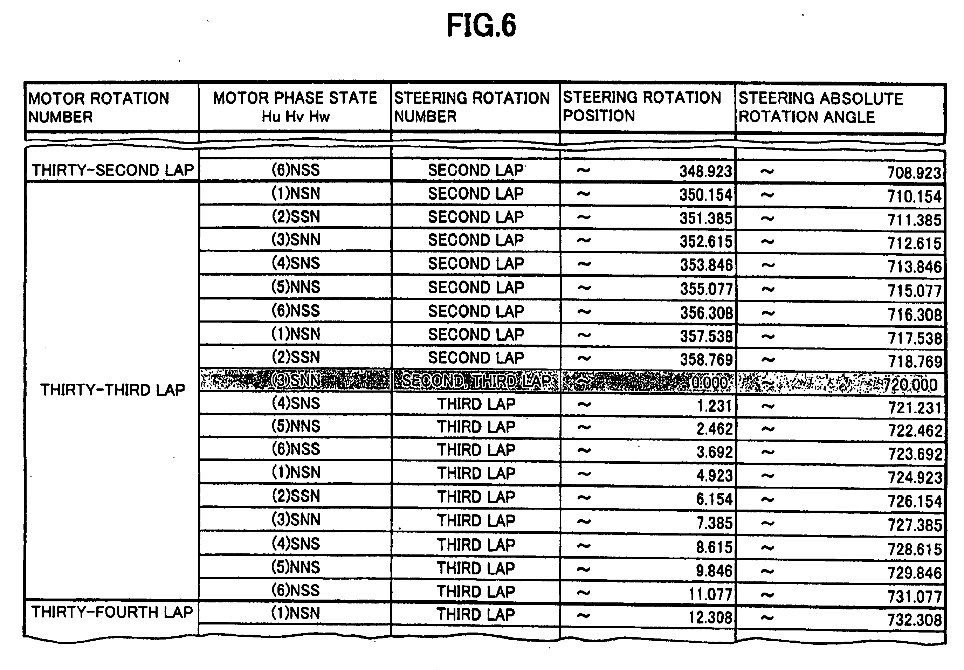

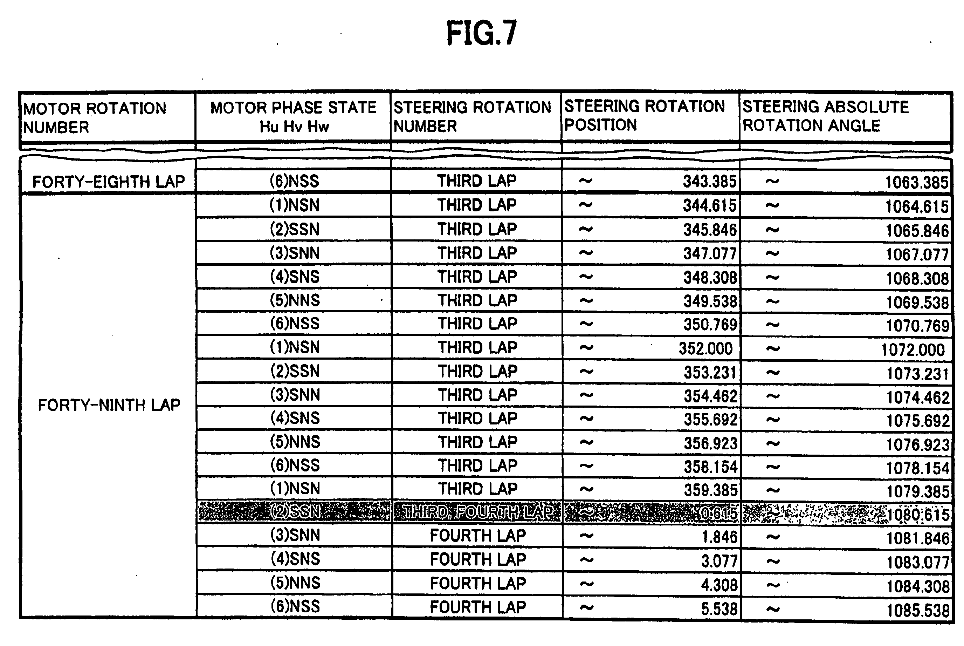

For example, in the case that the steering rotation position is close to 0 degree, the phase state at the first lap (0 lap) of the steering rotation number is (1) (see FIG. 4), the phase state at the second lap is (5) (see FIG. 5), the phase state at the third lap is (3) (see FIG. 6) and the phase state at the fourth lap is (2) (see FIG. 7), and they are in the different states from each other.

This is because the worm speed reduction ratio is set 16.25 and the motor phase state at the same steering rotation position is set so as to be different from each other at the respective laps of the steering rotation number.

Accordingly, at the same steering rotation position, it is known from the phase state of the motor what laps the steering rotation number is, so that the steering angle to about three laps of the steering can be detected by the absolute angle by determining the steering absolute rotation angle by adding 360 degrees to the steering rotation position in the case of the second lap, adding 720 degrees thereto in the case of the third lap, and adding 1080 degrees thereto in the case of the fourth lap.

Then, a computer inputs and computes a steering rotation position signal output from the optical module 33 of the torque sensor 30 and a motor phase state signal output from the Hall element so as to calculate the absolute angle of the steering angle.

Since the phase state of the motor 20 is detected by utilizing the Hall elements Hu, Hv and Hw detecting the rotation position of the rotor, it is not necessary that an exclusive detecting apparatus is independently provided.

The structure for detecting the rotation position of the rotor includes an optical type, a high frequency induction type, a magnetic resistance element type and the like in addition to the Hall element type. However, all of them can be used for detecting the phase state of the motor.

In this case, the steering absolute rotation angle is exemplified by setting the start of the position near the left steering limit to 0 degree (reference). However, the steering neutral position may be set to the reference.

The steering rotation position can be detected by using the optical module 33 of the torque sensor 30. In this case, the exclusive detecting apparatus is not required.

As mentioned above, it is possible to detect the absolute rotation angle of the steering system by the simple structure.

Further, by using the worm speed reduction mechanism 25, it is possible to construct a compact and high speed reduction ratio. Furthermore, it is possible to easily change the speed reduction ratio by setting the number of worm grooves.

The speed reduction ratio which can make the motor phase state in the same steering rotation position different from each other in the respective laps of the steering rotation number, is not limited to 16.25, and can be suitably changed.

Since the speed reduction ratio of the speed reduction mechanism is set so that the rotation phase states of the motor at the cycle of 360 degrees of the steering pinion shaft rotation position are different, the steering rotation angle detecting means can identify the steering pinion shaft rotation position at the cycle of 360 degrees on the basis of the combination between the steering pinion shaft rotation position information and the motor phase information so as to detect the absolute rotation angle over 360 degrees of the steering pinion shaft.

Furthermore, in some embodiments of the steering rotation angle detecting apparatus of the power steering, the speed reduction mechanism is a worm speed reduction mechanism. Advantageously, by using the worm speed reduction mechanism, it is possible to construct the compact and high speed reduction ratio. Further, it becomes easy to change the speed reduction ratio by setting the number of grooves of the worm.

Furthermore, in some embodiments of the steering rotation angle detecting apparatus of the power steering, the steering pinion shaft rotation position detecting means is a rotary encoder which optically reads a pattern provided in a circumference of the steering pinion shaft so as to detect the steering pinion shaft rotation position. Advantageously, it is possible to accurately detect, the rotation position of the steering pinion shaft with respect to the fixed member at a low cost by using a general rotary encoder.

Furthermore, in some embodiments of the steering rotation angle detecting apparatus of the power steering, the motor is a brushless motor. The motor phase detecting means is a Hall element for detecting the rotation position of the rotor in the motor. Advantageously, it is possible to detect the rotation phase state of the motor on the basis of the Hall element detecting the magnetic pole position of the rotor in the motor by using the brushless motor for the motor applied to the steering pinion shaft so as to assist the steering.

The apparatus for exclusively detecting the rotation phase state is not independently required and it is possible to achieve a low cost.

As heretofore explained, embodiments of the present invention have been described in detail with reference to the drawings. However, the specific configurations of the present invention are not limited to the embodiments shown and described, as long as these configurations do not depart from the scope of the present invention as defined in the appended claims.

## Claims

1. A steering rotation angle detecting apparatus of a power steering system (10) having a driving force of a motor (20) applied to a steering pinion shaft (13) via a speed reduction mechanism (25) to assist a steering, comprising:
a steering pinion shaft rotation position detecting means (30) adapted to detect a rotation position of the steering pinion shaft (13) with respect to a fixed member;
a motor phase detecting means (Hu, Hv, Hw) adapted to detect cyclic rotation phase states of the motor (20), and
a steering rotation angle detecting means adapted to detect an absolute rotation angle over 360 degrees of the steering pinion shaft (13) on the basis of a steering pinion shaft rotation position information detected by the steering pinion shaft rotation position detecting means and a motor phase information detected by the motor phase detecting means,
wherein a speed reduction ratio of the speed reduction mechanism (25) is set so that the rotation phase states of the motor at cycles of 360 degrees of the steering pinion shaft rotation position are different,
wherein the steering pinion shaft rotation detecting means (30) comprises an optical module (33), and
wherein the optical module (33) is comprised in a torque sensor (30),
**characterized in that**
the optical module (33) comprises a reflection disc (32) adhered to a side of the steering pinion shaft (13), a bar code pattern (32a) attached to the reflection disc (32) so that the optical module (33) reads the bar code patterns (32a) of the reflective disc (32), and **in that**
the optical module (33) is comprised in torque sensor (30) adapted to detect a torque value on the basis of a difference of angles of an input shaft (11) with respect to the steering pinion shaft (13), where the torque sensor (30) further comprises a second reflection disc (31) adhered to a side of the input shaft (11), a bar code pattern (31a) attached to the reflection disc (31) so that the optical module (33) roads also the bar code patterns (31a) of the reflective disc (31).

2. The steering rotation angle detecting apparatus according to claim 1, wherein the motor phase detecting means comprises a high frequency induction type structure.

3. The steering rotation angle detecting apparatus according to claim 1, wherein the motor phase detecting means comprises Hall elements (Hu, Hv, Hw) adapted to detect phase states i.e. positions of rotation, of the motor (20).

4. The steering rotation angle detecting apparatus According to claim 3, wherein the motor (20) is a brushless electromotor comprising, for example three, armature windings formed in, for example eighteen, slots, and three Hall elements (Hu, Hv, Hw) are provided between respective pairs of slots, for example between the fifteenth and sixteenth, between the thirteenth and fourteenth and between the seventeenth and eighteenth.

5. The steering, rotation angle detecting apparatus according to claim 3 or 4, wherein three Hall elements (Hu, Hv, Hw) are arranged such that an interval of 40° is generated between a first Hall element (Hu) and a second Hall element (Hv), and between second Hall element (Hv) and a third Hall element(Hw).

6. The steering rotation angle detecting apparatus according to anyone of claims 3 to 5, wherein the three Hall elements (Hu, Hv, Hw) are arranged such that they can detect six different phase states of the motor (20).

7. The steering rotation angle detecting apparatus according to claim 6, wherein the six different phase states of the motor (20) are sequentially detected at every 20°.

8. A steering rotation angle detecting apparatus of a power steering system according to anyone of the preceding claims, wherein the speed reduction mechanism (25) comprises a worm speed reduction mechanism.

9. A steering rotation angle detecting apparatus of a power steering system according to anyone of the preceding claims, wherein motor is a brushless motor that is structured such that three armature windings are formed in eighteen slots, and the rotor in which six magnets comprising N poles and S poles are alternately structured at an interval of 60 degrees, rotates.

## Patentansprüche

1. Lenkdrehwinkelerfassungsvorrichtung einer Servolenkung (10) bei welcher eine Antriebskraft eines Motors (20) über einen Geschwindigkeitsverringerungsmechanismus (25) auf eine Lenkritzelwelle (13) aufgebracht wird, um eine Lenkung zu unterstützen, mit:
einer Lenkritzelwellendrehlagenerfassungseinrichtung (30), die zur Erfassung einer Drehlage der Lenkritzelwelle (13) bezüglich einem festen Teil ausgelegt ist;
einer Motorphasenerfassungseinrichtung (Hu, Hv, Hw), die zur Erfassung zyklischer Drehphasenzustände des Motors (20) ausgelegt ist, und
einer Lenkdrehwinkelerfassungseinrichtung, die dazu ausgelegt ist, auf Grundlage einer von der Lenkritzelwellendrehlagenerfassungseinrichtung erfaßten Lenkritzelwellendrehlageinformation und einer von der Motorphasenerfassungseinrichtung erfaßten Motorphaseninformation einen absoluten Drehwinkel über 360° der Lenkritzelwelle (13) zu erfassen,
wobei ein Geschwindigkeitsverringerungsverhältnis des Geschwindigkeitsverringerungsmechanismus (25) so gesetzt ist, daß die Drehphasenzustände des Motors bei Zyklen von 360° der Lenkritzelwellendrehlage verschieden sind,
wobei die Lenkritzelwellendrehlagenerfassungseinrichtung (30) ein optisches Modul (33) aufweist, und
wobei das optische Modul (33) Teil eines Verdrillungssensors (30) ist,
**dadurch gekennzeichnet, daß**
das optische Modul (33) eine an einer Seite der Lenkritzelwelle (13) angebrachte Reflexionsscheibe (32) und ein an der Reflexionsscheibe (32) derart befestigtes Barcodemuster (32a) aufweist, daß das optische Modul (33) die Barcodemuster (32a) von der reflektierenden Scheibe (32) liest, und daß
das optische Modul (33) Teil eines Verdrillungssensors (30) ist, der dazu ausgelegt ist, einen Verdrillungswert auf Grundlage einer Winkeldifferenz eines Eingangsschafts (11) bezüglich der Lenkritzelwelle (13) zu erfassen, wobei der Verdrillungssensor (30) weiter eine zweite Reflexionsscheibe (31), die an einer Seite des Eingangsschafts (11) angebracht ist, und ein derart an der Reflexionsscheibe (31) befestigtes Barcodemuster (31 a) aufweist, daß das optische Modul (33) ebenfalls die Barcodemuster (31 a) der Reflexionsscheibe (31) liest.

2. Lenkdrehwinkelerfassungsvorrichtung nach Anspruch 1, bei der die Motorphasenerfassungseinrichtung eine Hochfrequenz-Induktionstypstruktur aufweist.

3. Lenkdrehwinkelerfassungsvorrichtung nach Anspruch 1, bei der die Motorphasenerfassungseinrichtung Hallelemente (Hu, Hv, Hw) aufweist, die zur Erfassung von Phasenzuständen, d.h., Drehlagen, des Motors (20) ausgelegt sind.

4. Lenkdrehwinkelerfassungsvorrichtung nach Anspruch 3, bei der der Motor (20) ein Stromrichterelektromotor ist, der z.B. drei Armaturwindungen aufweist, die in, z.B. achtzehn, Schlitzen gebildet sind, und drei Hallelemente (Hu, Hv, Hw) zwischen jeweiligen Paaren von Schlitzen vorgesehen sind, z.B. zwischen dem fünfzehnten und sechzehnten, zwischen dem dreizehnten und vierzehnten, und zwischen dem siebzehnten und achtzehnten.

5. Lenkdrehwinkelerfassungsvorrichtung nach Anspruch 3 oder 4, bei der drei Hallelemente (Hu, Hv, Hw) derart angeordnet sind, daß ein Intervall von 40° zwischen einem ersten Hallelement (Hu) und einem zweiten Hallelement (Hv), und zwischen dem zweiten Hallelement (Hv) und einem dritten Hallelement (Hw) erzeugt ist.

6. Lenkdrehwinkelerfassungsvorrichtung nach einem der Ansprüche 3 bis 5, bei der die drei Hallelemente (Hu, Hv, Hw) derart angeordnet sind, daß sie sechs unterschiedliche Phasenzustände des Motors (20) erfassen können.

7. Lenkdrehwinkelerfassungsvorrichtung nach Anspruch 6, wobei die sechs unterschiedlichen Phasenzustände des Motors (20) alle 20° sequentiell erfaßt werden.

8. Lenkdrehwinkelerfassungsvorrichtung nach einem der vorhergehenden Ansprüche, bei der der Geschwindigkeitsverringerungsmechanismus (25) einen Schnecken-Geschwindigkeitsverringerungsmechanismus aufweist.

9. Lenkdrehwinkelerfassungsvorrichtung nach einem der vorhergehenden Ansprüche, bei dem der Motor ein Stromrichtermotor ist, der derart aufgebaut ist, daß drei Armaturwindungen in achtzehn Schlitzen gebildet sind, und der Rotor, in dem sechs Magneten, aufweisend Nordpole und Südpole, abwechselnd in einem Intervall von 60° angeordnet sind, sich dreht.

## Revendications

1. Dispositif de détection d'angle de rotation d'un système de direction assistée (10) dans lequel la force motrice d'un moteur (20) est appliquée à un arbre de pignon de direction (13) via un mécanisme de réduction de vitesse (25) pour assister la direction, comprenant :
un moyen de détection de position de rotation (30) d'arbre de pignon de direction adapté pour détecter une position de rotation de l'arbre de pignon de direction (13) par rapport à un élément fixe ;
un moyen de détection de phase de moteur (Hu, Hv, Hw) adapté pour détecter des états de phase de rotation cyclique du moteur (20) ; et
un moyen de détection d'angle de rotation de direction adapté pour détecter un angle de rotation absolu sur 360 degrés de l'arbre de pignon de direction (13) d'après une information de position de rotation d'arbre de pignon de direction détectée par le moyen de détection de position de rotation d'arbre de pignon de direction et une information de phase de moteur détectée par le moyen de détection de phase de moteur,
dans lequel le rapport de réduction de vitesse du mécanisme de réduction de vitesse (25) est choisi de telle manière que les états de phase de rotation du moteur à des cycles de 360 degrés de la position de rotation de l'arbre de pignon de direction sont différents,
dans lequel le moyen de détection de rotation (30) d'arbre de pignon de direction comprend un module optique (33), et
dans lequel le module optique (33) est compris dans un capteur de couple (30),
**caractérisé en ce que** :
le module optique (33) comprend un disque réfléchissant (32) fixé sur un côté de l'arbre de pignon de direction (13), un dessin de code à barres (32a) fixé au disque réfléchissant (32) de telle manière que le module optique (33) lit les dessins de code à barres (32a) du disque réfléchissant (32),
et **en ce que** le module optique (33) est compris dans un capteur de couple (30) adapté pour détecter une valeur de couple d'après une différence d'angles d'un arbre d'entrée (11) par rapport à l'arbre de pignon de direction (13), où le capteur de couple (30) comprend en outre un deuxième disque réfléchissant (31) fixé sur un côté de l'arbre d'entrée (11), un dessin de code à barres (31 a) fixé au disque réfléchissant (31) de telle manière que le module optique (33) lit aussi les dessins de code à barres (31a) du disque réfléchissant (31).

2. Dispositif de détection d'angle de rotation de direction selon la revendication 1, dans lequel le moyen de détection de phase de moteur comprend une structure du type à induction à haute fréquence.

3. Dispositif de détection d'angle de rotation de direction selon la revendication 1, dans lequel le moyen de détection de phase de moteur comprend des éléments à effet Hall (Hu, Hv, Hw) adaptés pour détecter les états de phase, c-à-d. les positions de rotation, du moteur (20).

4. Dispositif de détection d'angle de rotation de direction selon la revendication 3, dans lequel le moteur (20) est un moteur électrique sans balai comprenant par exemple trois enroulements d'induit formés dans par exemple dix-huit fentes, et trois éléments à effet Hall (Hu, Hv, Hw) sont placés entre des paires de fentes respectives, par exemple entre la quinzième et la seizième, entre la treizième et la quatorzième et entre la dix-septième et la dix-huitième.

5. Dispositif de détection d'angle de rotation de direction selon la revendication 3 ou 4, dans lequel trois éléments à effet Hall (Hu, Hv, Hw) sont placés de telle manière qu'un intervalle de 40° est créé entre un premier élément à effet Hall (Hu) et un deuxième élément à effet Hall (Hv), et entre le deuxième élément à effet Hall (Hv) et un troisième élément à effet Hall (Hw).

6. Dispositif de détection d'angle de rotation de direction selon l'une quelconque des revendications 3 à 5, dans lequel les trois éléments à effet Hall (Hu, Hv, Hw) sont disposés de telle manière qu'ils peuvent détecter six états de phase différents du moteur (20).

7. Dispositif de détection d'angle de rotation de direction selon la revendication 6, dans lequel les six états de phase différents du moteur (20) sont détectés en séquence tous les 20°.

8. Dispositif de détection d'angle de rotation de direction d'un système de direction assistée selon l'une quelconque des revendications précédentes, dans lequel le mécanisme de réduction de vitesse (25) comprend un mécanisme de réduction de vitesse à vis sans fin.

9. Dispositif de détection d'angle de rotation de direction d'un système de direction assistée selon l'une quelconque des revendications précédentes, dans lequel le moteur est un moteur sans balai qui est conçu de telle manière que trois enroulements d'induit sont formés dans dix-huit fentes, et dans lequel le rotor, qui comporte six aimants comprenant des pôles N et des pôles S placés de manière alternée avec un intervalle de 60 degrés, tourne.
